**Europäisches Patentamt**

**European Patent Office**

**Office européen des brevets**

(19)

(11) Publication number: **0 121 991**
**A1**

(12) # EUROPEAN PATENT APPLICATION

(21) Application number: **84300910.1**

(22) Date of filing: **14.02.84**

(51) Int. Cl.³: **G 01 P 1/11,** G 01 D 13/26

(30) Priority: **30.03.83 GB 8308757**

(43) Date of publication of application: **17.10.84**
**Bulletin 84/42**

(84) Designated Contracting States: **DE FR IT SE**

(71) Applicant: **The BOC Group plc, Hammersmith House, London W6 9DX (GB)**

(72) Inventor: **Lefever, James Charles, 8 Greensted Green, Greensted Ongar Essex (GB)**

(74) Representative: **Gough, Peter, c/o The BOC Group plc Hammersmith House, London W6 9DX (GB)**

(54) **Improvements in measuring apparatus.**

(57) A measuring apparatus in the form of a pressure gauge 1 includes a pointer 2 movable over a dial 3. An adjustable set point 8 forms part of an arm 7 which can move around the dial 3 and carry with it a plastics housing 15 in which are mounted an infra-red emitting diode 16 and a silicon photodarlington transistor 17. The pointer 2 has an end portion 9 which reflects the infra-red radiation from the diode 16 to the transistor 17 when the pointer 2 is in alignment with the set point 8.

The set point 8 is movable around the dial by means of a friction roller 10 which engages the periphery of an annular disc 6 attached to the arm 7.

0121991

- 1 -

<u>IMPROVEMENTS IN MEASURING APPARATUS</u>

The present invention relates to measuring apparatus for setting a selected value and displaying an actual value of a parameter and in particular to a pressure gauge with an adjustable set point.

Measuring apparatus in the form of a speedometer is known from UK Patent No. 1449776. The speedometer is circular and includes a dial over the face of which moves a pointer for indicating the actual speed of a vehicle to which the speedometer is connected. A set point arm or needle is mounted above the dial face for movement around a central pivot. The set point arm carries a detection head including a light emitter and two photo-electric receivers. The arrangement is such that when the pointer moves between the dial face and the detection head, light emanating from the emitter is reflected back to the receivers, thereby triggering off a warning device to indicate when a set speed has been reached. This measuring apparatus suffers from the disadvantage that the set point arm together with the detection head is mounted above the face of the dial and thereby obscures the dial.

Another speedometer is known from UK Patent No. 1206597 in which a set point device includes a body in which are embedded the ends of a pair of optical cables. The body is positioned about the periphery of the dial to be aligned with a preselected speed, for example 30 mph. When a pointer reaches the 30 mph mark on the dial, a reflector carried by the pointer reflects light emitted from the end of one cable towards the end of the other cable which produces a warning effect.

PG/AC/24.1.84
8304/1795M/417M

This measuring apparatus relies on a light source spaced from the apparatus and not forming part of the apparatus. The use of lengths of optical cable causes the apparatus to be bulky and is conducive to faults in the transmission of the light.

It is an aim of the present invention to provide a measuring apparatus having a set point arrangement which avoids the necessity of a bulky mechanical/ electrical system or the obscuring of the face of the dial of the apparatus.

According to the present invention, a measuring apparatus comprises a pointer movable over the face of a dial, an electro-magnetic radiation source and a sensor for detecting electro-magnetic radiation emanating from said source, the source and the sensor both being mounted on an arm, which arm is mounted on the measuring apparatus for rotation around the periphery of the dial face without obscuring the dial face, at least the tip of the pointer having a material capable of reflecting the electro-magnetic radiation from the source to the sensor so that the position of the pointer can be sensed at any pre-selected position of the arm around the dial.

Preferably, the electro-magnetic radiation source is an infra-red emitting diode and the sensor is a silicon photodarlington transistor.

The diode and the transistor can be mounted together in a plastics housing attached to the arm.

An embodiment of the invention will now be described, by way of example, reference being made to the Figures of the accompanying diagrammatic drawings in which :-

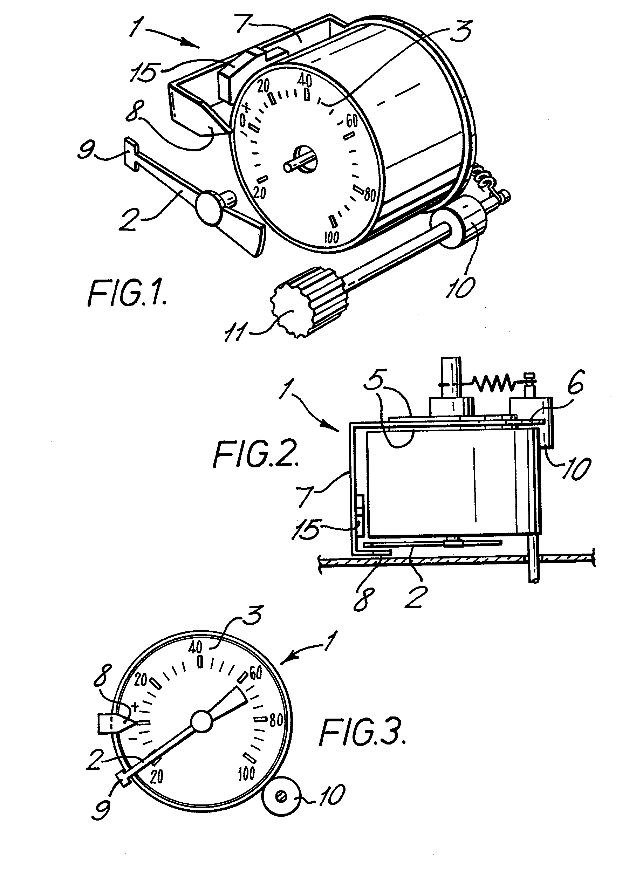

Figure 1 is an exploded perspective view of a measuring apparatus in the form of a pressure gauge;

PG/AC/24.1.84
8304/1795M/417M

- 3 -

Figure 2 is a plan view of the pressure gauge of Figure 1;

Figure 3 is a vertical elevation of the pressure gauge of Figure 1;

Figure 4 is a detail in perspective of part of an adjustable set point; and

Figure 5 is a schematic plan of a further detail of the adjustable set point.

As shown, a measuring apparatus in the form of a pressure gauge 1 includes a pointer 2 movable over a dial 3 for indicating the pressure of a fluid when the pressure gauge 1 is in use. The pointer 2 has at one end, a portion 9 capable of reflecting infra-red radiation as will be explained.

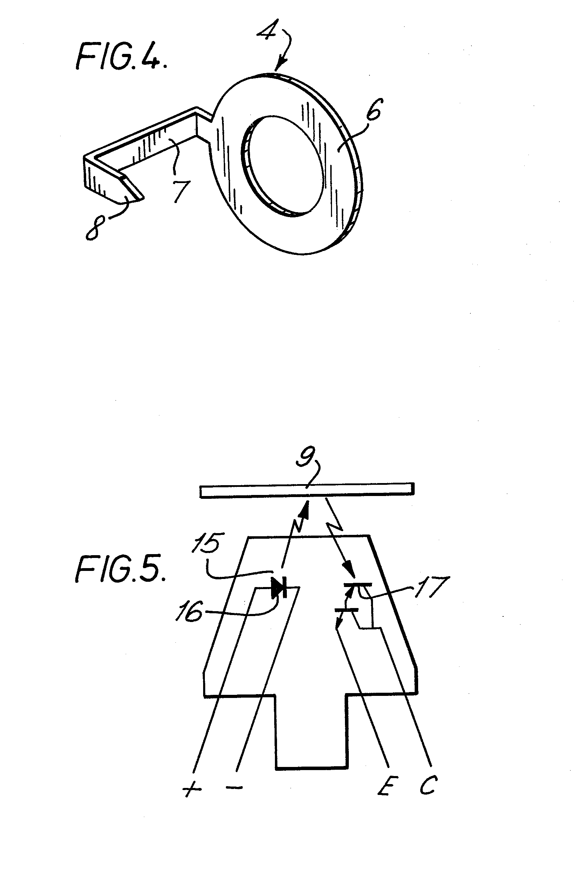

An arm assembly 4 (see Figure 4) is clamped to the back of the pressure gauge between friction washers 5 and includes an annular disc 6 from which extends an arm 7. The forward (as shown) end of the arm 7 is formed at right angles to the remainder of the arm and has the shape of a point 8 which, as will be explained, can be lined up with indicia on the face of the dial 3.

A friction roller 10 is spring loaded to engage the periphery of the disc 6 and can be rotated by means of a knob 11.

Mounted on the arm 7 for movement therewith is a plastics housing 15. The housing 15 has embedded therein a source of electro-magnetic radiation in the form of an infra-red emitting diode 16 and a sensor for electro-magnetic radiation in the form of a silicon photodarlington transistor 17.

In use, the knob 11 is rotated by an operator which in turn rotates the friction roller 10 and hence the disc 6 and arm 7. Rotation takes place until the point 8 is aligned with pre-selected indicia on the dial 3. The arm 7 carries with it the housing 15 together with the diode 16 and transistor 17.

PG/AC/24.1.84
8304/1795M/417M

When the pressure of the fluid being measured is sufficient to cause the pointer 2 to align with the set point 8 the end portion 9 will reflect infra-red light emitted from the diode back to the transistor 17. Receipt of an infra-red signal by the transistor 17 will operate a warning device which tells an operator that the pressure has reached a pre-determined set level.

Although references have been made to infra-red radiation, it will be appreciated that any other form of electro-magnetic radiation could be used. If other electro-magnetic radiation is used, then the end portion 9 would be made of a material or coated with a material to reflect that electro-magnetic radiation.

The particular advantage of the measuring apparatus described is that the diameter of the gauge 1 is not significantly increased by the various integers of the adjustable set point arrangement. Furthermore, the dial 3 of the gauge is unobstructed.

PG/AC/24.1.84
8304/1795M/417M

- 5 -

## CLAIMS

1.  A measuring apparatus comprising a pointer 2 movable over the face of a dial 3, an electro-magnetic radiation source 16 and a sensor 17 for detecting electro-magnetic radiation emanating from said source, the source 16 and the sensor 17 both being mounted on an arm 7, at least the tip 9 of the pointer 2 having a material capable of reflecting the electro-magnetic radiation from the source 16 to the sensor 17, so that the position of the pointer 2 can be sensed at any pre-selected position of the arm 7 around the dial 3, <u>characterised in that</u> the arm 7 is mounted on the measuring apparatus for rotation around the periphery of the dial face without obscuring the dial face.

2.  A measuring apparatus as claimed in claim 1, <u>characterised in that</u> the electro-magnetic radiation source 16 is an infra-red emitting diode and the sensor 17 is a silicon photodarlington transistor.

3.  A measuring apparatus as claimed in claim 2, <u>characterised in that</u> the diode and the transistor are mounted together in a plastics housing 15 attached to said arm 7.

4.  A measuring apparatus as claimed in claim 3, <u>characterised in that</u> one end of the arm 7 is formed as a point 8 to act as a set point indicator and the opposite end is attached to a disc 6, the periphery of which disc 6 is engaged by the periphery of a rotatable friction roller 10 for rotating the disc 6 and thereby the arm 7 around the dial 3.

PG/AC/24.1.84
8304/1795M/417M

0121991

1/2

FIG.1.

FIG.2.

FIG.3.

FIG.4.

*4*

*6*

*7*

*8*

FIG.5.

*9*

*15*

*16*

*17*

+    −                    E   C

0121991

**EUROPEAN SEARCH REPORT**

Application number

EP 84 30 0910

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-1 234 648 (DEIMASTRO) * Page 1, column 2, lines 33-41; figures 1,2 * | 1 | G 01 P 1/11 G 01 D 13/26 |
| Y,D | GB-A-1 449 776 (MICROLEC) * Page 3, lines 5-25; figures 1A,1B * | 1-3 | |
| A | US-A-2 805 410 (COLT) * Column 2, lines 10-16, 33-47; figures 1,3 * | 1,4 | |
| A | DE-C- 376 311 (MÜNCHOW et al.) * Page 2, column 1, lines 13-35; figures 2,3 * | 1,4 | |
| A,D | GB-A-1 206 597 (LUCAS) * Page 1, lines 32-46; figures 1,2 * | 1 | TECHNICAL FIELDS SEARCHED (Int. Cl. ³)<br><br>G 01 P<br>G 01 D<br>G 12 B |

The present search report has been drawn up for all claims

| Place of search THE HAGUE | Date of completion of the search 06-07-1984 | Examiner HANSEN P. |
|---|---|---|